# EUROPEAN PATENT APPLICATION

(11) **EP 1 566 765 A1**
(43) Date of publication of application: **24.08.2005**
(21) Application number: 04003909.1
(22) Date of filing: 20.02.2004
(51) Int. Cl.: G06T 5/00, G06T 7/00, G06T 1/60

(54) **Method for providing a combined system of a motion estimation unit and a noise reduction unit with input image data**

(71) Applicant: Sony International (Europe) GmbH, 10785 Berlin (DE)
(72) Inventor: Schwendowius, Jörg, Stuttgart Technology Center, Hedelfinger Strasse 61 70327 Stuttgart (DE); Dilly, Altfried, Stuttgart Technology Center, Hedelfinger Strasse 61 70327 Stuttgart (DE); Scholz, Alexander, Stuttgart Technology Center, Hedelfinger Strasse 61 70327 Stuttgart (DE); Golov, Gil, Stuttgart Technology Center, Hedelfinger Strasse 61 70327 Stuttgart (DE)
(74) Representative: Müller - Hoffmann & Partner

(57) **Abstract**

A method for providing a combined system (30) of a motion estimation unit (11) and a noise reduction unit (12) with input image data comprises the following steps: Using a sliding window mechanism to generate a common image update data stream from image data stored in an image memory (10), splitting the data stream to obtain a first and a second data stream which are identical, and supplying the motion estimation unit (11) with the first data stream, and supplying the noise reduction unit (12) with the second data stream.

## Description

The invention provides a method for providing a combined system of a motion estimation unit and a noise reduction unit with input image data, and an image processing system employing said method. Further, the invention provides a method for accessing image data stored in a low access bandwidth memory, and a cache architecture being suitable to perform said method.

It is known in the field of image processing to combine the algorithmic steps of motion estimation and noise reduction in order to achieve high image quality. However, the combination of motion estimation and noise reduction generally requires more memory resources as well as a higher memory access bandwidth. This may cause problems since embedded hardware applications may not allow an increase in memory resources/memory access bandwidth.

It is an object of the present invention to provide a method and a system which allows the combination of motion estimation and noise reduction without significantly increasing required memory sizes and memory access bandwidths.

To solve this object, the present invention provides a method for providing a combined system of a motion estimation unit and a noise reduction unit with input image data according to claim 1. Further, the present invention provides an image processing system according to claim 11. Further, the invention provides a method for accessing image data stored in a low access bandwidth memory according to claim 21. In addition, a cache architecture being suitable to perform said accessing method according to claim 29 is provided. Last, a computer program product and a computer readable storage means according to claims 39 and 40 are provided. Further features and embodiment of the present invention are defined in respective subclaims.

According to the present invention, a method for providing a combined system of a motion estimation unit and a noise reduction unit with input image data comprises the following steps: First, a sliding window mechanism is used to generate a common image update data stream from image data stored in a common image memory. Second, the data stream is split to obtain a first and a second data stream which are identical. Third, the motion estimation unit is supplied with the first data stream, and the noise reduction unit is supplied with said second data stream.

To realize said method, the noise reduction unit is preferably designed such that a subset of a motion estimation cache update stream (i.e. a part of the first data stream) is sufficient to be used also as a noise reduction cache update stream (i.e. only a part of the second data stream is sufficient for the noise reduction unit to perform its tasks). It is also possible that the motion estimation unit is designed such that a subset of a noise reduction cache update stream (i.e. a part of the second data stream) is sufficient to be used also as a motion estimation cache update stream (i.e. only a part of the first data stream is used by the motion estimation unit to perform its tasks). In other words: The working mechanisms of the noise reduction unit and the motion estimation unit are chosen such that they can achieve their results on the basis of the same image data (common image update data stream).

A basic idea of the present invention is that the noise reduction unit and the motion estimation unit share the same image memory by sharing an output derived therefrom (image update data stream). This makes it possible to avoid increasing demands with respect to memory size and access bandwidth.

Preferably, the first data stream or parts thereof is/are piped through a motion estimation cache of the motion estimation unit. Corresponding thereto, the second data stream or parts thereof is/are piped through a noise reduction cache of the noise reduction unit. The motion estimation cache and the noise reduction cache store input image data (image update data) currently needed by respective motion estimation algorithms/noise reduction algorithms to perform their tasks. Advantageously, said caches show a high memory access bandwidth.

The first data stream may be preprocessed by a first preprocessing algorithm before supplying it to the motion estimation cache. Corresponding thereto, the second data stream may be preprocessed according to a second preprocessing algorithm before supplying it to the noise reduction cache.

Preferably, the common image update data stream consists of several update data units, wherein each data unit represents a two-dimensional rectangular area of images stored in the common image memory. A height of said rectangular area may preferably be as large or larger than the maximum of the heights of the noise reduction cache and the motion estimation cache. This ensures that both the motion estimation cache and the noise reduction cache can be supplied with input image data resulting from the same common image update data stream.

Advantageously, a width of the rectangular area may be as large or larger than a step size of a sliding window used in said sliding window mechanism. Typically, motion estimation cache updates are larger in height than noise reduction cache updates, thus the noise reduction integration does not cause additional memory bandwidth requirements.

In a preferred embodiment, the motion estimation cache and the noise reduction cache are structured in a way that each time a new update data unit is inserted into the caches, an already stored update data unit is pushed out of the caches (FIFO-(First-In-First-Out)cache).

Preferably, the width of said rectangular area is larger than a step size of a sliding window used in said sliding window mechanism, and/or said height of the rectangular area is larger than the maximum of the heights of the noise reduction cache and the motion estimation cache. The rectangular area comprises a central area showing a width of the step size of the sliding window and a height of the maximum of the heights of the noise reduction cache and the motion estimation cache. The central area is surrounded by horizontal and/or vertical overlap areas, wherein only data lying within the central area is stored in the noise reduction cache and the motion estimation cache. Data lying within said horizontal and/or vertical overlap areas may be used as run-in data or run-out data in respective preprocessing steps in which said first/second data streams are preprocessed.

The present invention further provides an image processing system, comprising:
- a motion estimation unit and a noise reduction unit which are connected to a common image memory,
- means for generating a common image update data stream from image data stored in the image memory on the basis of a sliding window mechanism,
- means for splitting the data stream to obtain a first and a second data stream which are identical, and
- means for supplying the first data stream to the motion estimation unit and for supplying the second data stream to the noise reduction unit.

The motion estimation unit preferably comprises a high access bandwidth estimation cache which stores data of the first data stream. Accordingly, the noise reduction unit may comprise a high access bandwidth noise cache storing data of the second data stream.

Between the splitting means and the motion estimation unit a first preprocessing means may be provided, and/or between the splitting means and the noise reduction unit a second preprocessing means may be provided. The first/second preprocessing means are preprocessing the first/second data stream according to a first/second algorithm.

The motion estimation cache and the noise reduction cache are preferably organized as FIFO -caches through which the first/second data streams are piped.

The common image update data stream may consist of several update data units, wherein each data unit represents a two-dimensional rectangular area of images stored in said image memory. A height of the rectangular area may be as large or larger than the maximum of the heights of the noise reduction cache and the motion estimation cache. A width of said rectangular area may be as large or larger than a step size of a sliding window used in the sliding window mechanism. The motion estimation cache and said noise reduction cache show capacity for storing a certain amount of (parts of) the update data units.

Preferably, the width of the rectangular area is larger than a step size of a sliding window used in the sliding window mechanism, and/or the height of the rectangular area is larger than the maximum of the heights of the noise reduction cache and the motion estimation cache, wherein the rectangular area comprises a central area showing a width of the step size of the sliding window and a height of the maximum of the heights of the noise reduction cache and the motion estimation cache. The central area is surrounded by horizontal and/or vertical overlap areas, wherein only data lying within the central area is stored in the noise reduction cache and the motion estimation cache. Data lying within the horizontal and/or vertical overlap areas is used as run-in data or run-out data in the first/second preprocessing means, in which the first/second data streams are preprocessed.

The invention further provides a computer program product comprising computer program means adapted to perform and/or to realize the method for providing a combined system of a motion estimation unit and a noise reduction unit with input image data and/or realize the system according to the present invention, when it is executed on a computer, a digital signal processing means, or the like. Last, the present invention provides a computer readable storage means for storing a computer program product according to the present invention.

In the following description, the present invention will be described in detail by way of example while making reference to the accompanying drawings, wherein:
- **Fig. 1**: shows a schematic drawing for explaining the principles of motion estimation and noise reduction source data usage.
- **Fig. 2**: a preferred embodiment of a system of combined motion estimation and noise reduction cache update mechanism according to the present invention.
- **Fig. 3**: a preferred embodiment of an update data unit and corresponding cache sizes of the motion estimation cache and the noise reduction cache.
- **Fig. 4**: shows the principle of the sliding window method which can be used by the present invention.
- **Fig. 5**: an example of orientations of cache read out areas within the high access bandwidth cache.
- **Fig. 6**: a preferred embodiment of a multi-layer cache architecture according to the present invention.
- **Fig. 7**: a preferred embodiment of a sub structure of the high access bandwidth cache according to the present invention.
- **Fig. 8**: a detailed preferred embodiment of a mapping table which maps cache content to RAM blocks and RAM block addresses.
- **Fig. 9**: a preferred embodiment of a "virtual to real" and "real to virtual" cache column translator which can be employed in the cache architecture of Fig. 6.

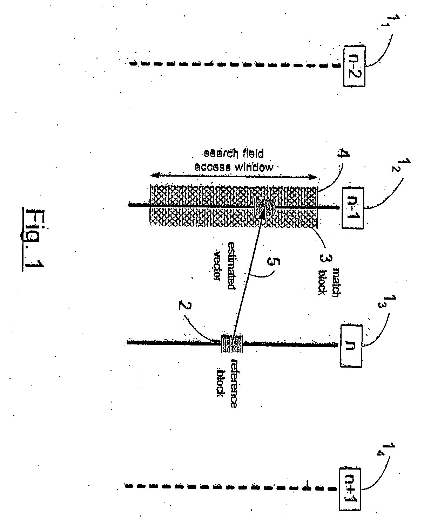

In Fig. 1, a first to fourth image data field 1₁ to 1₄ respectively belonging to different (temporally) successive images are shown. A little part of the third image data field 1₃ is defined as reference block 2. Then, in the second image data field 1₁ it is searched for the "best matching block" 3, i. e. a block which is identical or very similar to the reference block 2. This search is done within a search field access window 4, which is a part of the second image data field 1₂. When the best matching block 3 has been found, an estimated vector 5 can be defined.

Generally, all image data (for example from the first or fourth image data field 1₁ to 1₄) currently needed to form the motion estimation process is stored within a motion estimation cache having a high access bandwidth.

The ways how image data is used in motion estimation and noise reduction are similar. For example, the image data contained in the search field 4 as well as the image data contained in the reference block 2 can also be used to perform noise reduction. Therefore, it is possible to use the same search field image data and the same reference block image data for both noise reduction and motion estimation, i. e. memory resources can be shared.

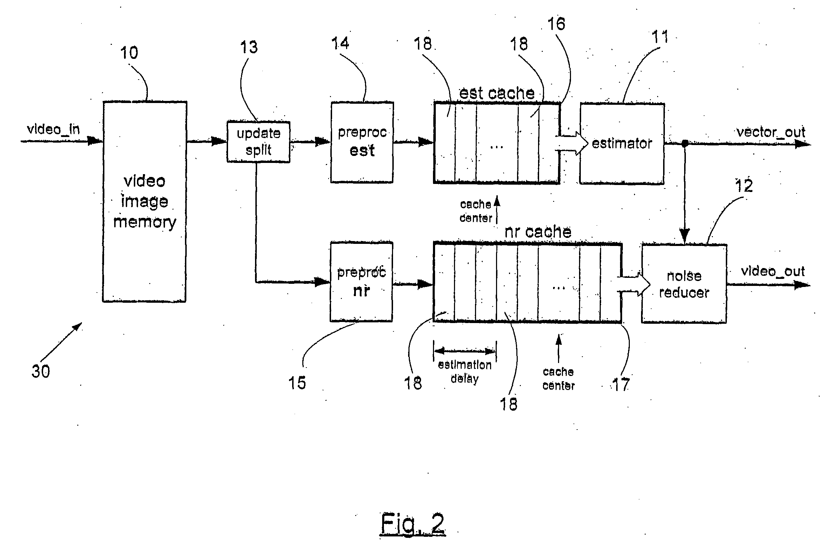

A preferred embodiment of a memory resource sharing mechanism will be explained while making reference to Fig. 2. An image memory 10 stores one or several images to be processed. The image data contained in the image memory 10 has to be supplied to a motion estimator 11 and a noise reducer 12. On the basis of a sliding window mechanism, a common image update data stream is derived from image data in the image memory 10 and supplied to a splitting means 13. The splitting means 13 splits the received common image update data stream into a first data stream which is supplied to a first preprocessing means 14 and a second data stream which is supplied to a second preprocessing means 15. An output of the first preprocessing means 14 is supplied to a motion estimation cache 16, and an output of the second preprocessing means 15 is supplied to a noise reduction cache 17. The motion estimator 11 performs its tasks while accessing data cached within the motion estimation cache 16, whereas the noise reducer performs its tasks by accessing data stored within the noise reduction cache 17. Therefore, the memory access bandwidth of the motion estimation cache 16 and the noise reduction cache 17 are preferably high. Since the noise reducer 12 needs an output signal of the motion estimator 11 in order to perform its tasks, it is necessary to cache more image update units 18 in the noise reduction cache than in the motion estimation cache (this results in an estimation delay). An output of the estimator is a vector "vector_out", and an output of the noise reducer is a signal referenced by "video_out". As can be seen, only one common image memory 10 and one common image update data stream are needed to both supply the noise reducer 12 and the motion estimator 11 with input image data.

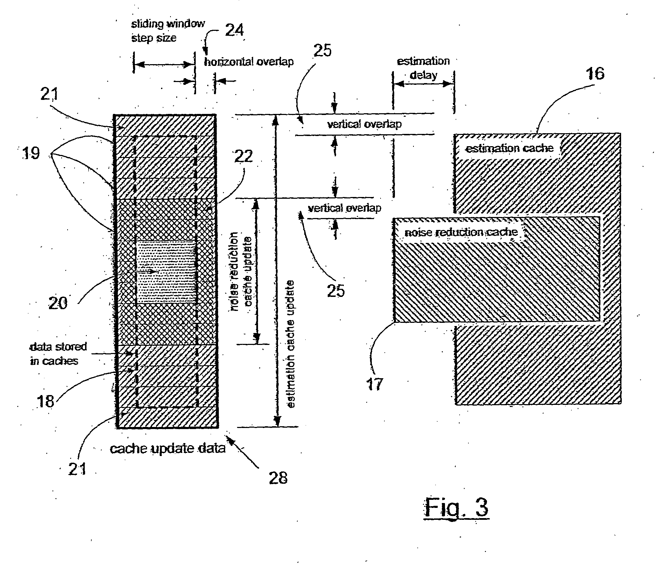

Now, making reference to Fig. 3, a preferred embodiment of the architecture of cache update units and proportions (widths/heights) of the motion estimation cache 16 and the noise reduction cache 17 will be explained. An update data unit 28 of the common image update data stream comprises several cache line sections 19 and is dimensioned in a way that its height is larger than the maximum of the heights of the motion estimation cache 16 and the noise reduction cache 17. The update data unit 28 represents a two-dimensional rectangular area of images stored in the image memory 10.

The cache update data unit 28 is the part of an image which a stepwise moving sliding window will cover after a respective step. The update width is preferably equal to the sliding window step size plus some horizontal overlap. The update height is preferably equal to the largest cache height plus some vertical overlap. Here, the estimator cache is higher than the noise reduction cache due to the accessed block size.

The cache update data unit 28 comprises content which is both supplied to the motion estimation cache 16 and the noise reduction cache 17 (center part 22), but also comprises content which is only supplied to the motion estimation cache 16 (upper and lower parts 21 sandwiching the center part 22). The center part 22 represents update data to be transferred also to the noise reduction cache 17. The respective reference cache update data 20 is equivalent but has less lines, and is transferred before or after the search cache update data (the whole part 22). It has already been mentioned that the search cache update data can be used by both the motion estimation unit and the noise reduction unit (cache update sharing). Also, the reference cache update data 20 can be shared by the motion estimation unit 11 and the noise reduction unit 12. Since the reference field data is generally derived from a different field and thus different part of the image memory 10 than the search field data, however, the reference cache update data 20 is contained within a different part of the image update data stream than the corresponding search cache update data. Thus, the search cache update data does generally not contain the reference cache update data. However, the invention is not restricted to this.

The horizontal and vertical overlap is required as preprocessing filter run-in and run-out data. Run-in data and run-out data is overlapping data that is needed to process the pixels of the update data that will actually be written to the caches. The overlapping run-in and run-out data is not written into the caches. For example, to process a pixel X, all surrounding pixels are needed. So all surrounding pixels are run-in and run-out data but only the center pixel X will be computed and written into the cache.

Preferably, a width of the rectangular area represented by the cache update data unit 18 is larger than a step size of a sliding window used in the sliding window mechanism, and/or the height of the rectangular area is larger than the maximum of the heights of the noise reduction cache 17 and the motion estimation cache 16, wherein the rectangular area comprises a central area 18 showing a width of the step size of said sliding window and a height of the maximum of the heights of the noise reduction cache 17 and the motion estimation cache 16) wherein the central area is surrounded by horizontal 24 and/or vertical 25 overlap areas, wherein only data lying within the central area is stored in the noise reduction cache 17 and said motion estimation cache 16. Data lying within the horizontal 24 and/or vertical 25 overlap areas is used as run-in data or run-out data in respective preprocessing steps in which the first/second data streams are preprocessed.

For reasons of simplicity it is not shown in Fig. 3 that the reference cache update data 20 corresponding to the content of the image update unit 28 (the search cache update data) is derived from a different area of the image memory 10 than the search cache update data.

The vector estimation processing causes some delay which is the temporal distance starting from the availability of the image data until the availability of the respective vector. This delay compensation is realized by implementing a wider noise reduction cache than would actually be needed for noise reduction processing.

The invention may also be expressed as follows:

A key feature of the present invention for combining estimator and noise reducer functionalities is to share these cache update data streams coming from a large video memory. Estimation cache updates are already used as noise reduction cache updates, thus preventing a memory access bandwidth increase when combining motion estimation and noise reduction processing.

The field memory and the memory access bandwidth for an integrated motion estimation and temporal noise reduction system are shared. The reduction of both resources is achieved by sharing the video data stored in memory and by combining the cache update transfers from the field memory. For an embedded memory hardware implementation the memory is a critical resource, whereas for an implementation with external field memories the memory access bandwidth is the critical resource. The present invention reduces both resource requirements which results in more efficient and more flexible implementations.

In Figure 1 the estimation and noise reduction processing orientation is shown in the temporal backward direction. A block in a search field (n-1) is referenced via an estimated vector relative to the reference block in field (n). The "best matching block" in the search field is determined by applying some matching criteria or correlation function. An example is a "Sum of Absolute Differences (SAD)" block matching operation. This block is located within a search window, which represents a part of the entire search image. The data of the search window is stored in the estimator's search cache for high bandwidth access of all candidate blocks, from which the best matching block is chosen. The small reference block is stored in the estimator's reference cache. The image data in the search field window and the reference block data is also used for temporal noise reduction processing.

Generally there is a difference between the image data stored in the estimator's cache and the data stored in the noise reduction cache. The estimation and the noise reduction processes generally require different preprocessing steps 14, 15 for the image data before storing it into the caches (see Figure 2). These preprocessing steps should be located before the respective caches, since cache read access bandwidth limitations prevent the preprocessing steps to be located afterwards and thus sharing a single cache also. Therefore, in this case, different data is stored in the motion estimator cache and the noise reduction cache and thus requires two different modules.

The architecture requires to supply two caches with their respective updates. As has become apparent, the invention describes a method where the same update data coming from the external memory can be used for feeding the motion estimation and noise reduction caches. By preprocessing the cache update data with respective filters, motion estimation and noise reduction processing can use individual prefilters while sharing the same video image memory.

There are several ideas underlying the invention:
- The noise reduction method works on a current field and uses motion compensated information from the previous field (backward direction). The inverse forward direction with estimation on the previous field with information from the current field is also possible, but the backward direction is preferred due to noise reduction performance reasons.
- The motion estimation also estimates vectors for the current field using the previous field information (backward direction). The inverse forward direction is also possible.
- The vector result for a specific block in the current image will be used to process this block with noise reduction with it's respective vector.
- The motion estimation requires a reference and a search cache, which are updated using data from a field memory to realize a sliding window representation with the cache content.
- The temporal noise reduction works by using the same field data to be stored in noise reduction caches. This will not increase the required memory size.
- The update data for the estimator caches will also be used to fill the noise reduction caches. This will not increase the required memory access bandwidth.
- The noise reduction cache stores more data than necessary for noise reduction processing to compensate the estimation process latency. Thus, the vector estimated for a specific block can be used for motion compensated noise reduction processing of that same block.

In the following description, a preferred method and a preferred architecture for transferring image data from the image memory 10 into the motion estimation cache 16 and into the noise reduction cache 17 are described. The advantage of said preferred method/architecture is that in case the image memory 10 shows a low access bandwidth, image data of the image memory 10 can nevertheless be accessed by the motion estimation unit 11 and the noise reduction unit 12 (from the high access bandwidth caches 16 and 17, to which image data is transferred on a sliding window mechanism basis) with a high bandwidth.

Advantageously, the motion estimation cache 16 and the noise reduction cache 17 are built identically. Each of said caches 16, 17 contains speed-up parts, cache parts, etc. The access bandwidth requirement for noise reduction is lower than for motion estimation.

According to the present invention, a method for accessing image data stored in a low access bandwidth memory comprises the following steps:
- using a sliding window mechanism to read out image data stored in the low access bandwidth memory, thereby generating sliding window update data,
- buffering generated sliding window update data in a buffer,
- transferring sliding window update data accumulated in the buffer to a cache having a high access bandwidth after a certain amount of new sliding window update data has been accumulated in the buffer,
- reading sliding window update data stored within the high access bandwidth cache out of said cache, thereby accessing the image data.

An important aspect of said method is that a buffer (update speed up module) is provided which allows to adjust the low access bandwidth to the high access bandwidth. The buffer writes sliding window update data read out from the low access bandwidth memory only into the access bandwidth cache if the buffer or parts thereof are full, i. e., if the buffer cannot store any new sliding window update data. After having transferred all accumulated sliding window update data into the high access bandwidth cache, the buffer is empty again and prepared to receive new sliding window update data from the low access bandwidth memory. During the time interval between two data transfer actions from the buffer to the high access bandwidth cache it is possible to read out the content of the high access bandwidth cache several times with a high speed. The provision of the buffer eliminates the need of permanently updating the high access bandwidth cache, which allows to increase the access bandwidth since waiting times due to update processes of the high access bandwidth cache can be decreased. Writing slowly but reading fast is one basic principle of this bandwidth adjustment.

Preferably, the high access bandwidth cache (the motion estimation cache 16 and/or the noise reduction cache 17) is accessed via at least two independent cache parts into which said sliding window update data has been stored. Thus, a "parallelization" of image data access can be realized which further increases access bandwidth.

If the high access bandwidth cache is split up into several parts, organization/management steps are necessary in order to assign read out sliding window update data to the different cache parts. This is preferably done by the buffer, which has means for sorting incoming sequential sliding window update data into different cache parts by employing an appropriate sorting algorithm.

If the high access bandwidth cache is for example split up into a first cache part and a second cache part, the sorting algorithm preferably assigns a first part of image data lines contained in the sliding window update data to the first cache part and a second part of image data lines contained in the sliding window update data to the second cache part.

The high access bandwidth cache may for example be split up into a first cache part and a second cache part, wherein the first cache part covers a first part of cache lines, and the second cache part covers a second part of cache lines. Preferably, the cache lines of the high access bandwidth cache are grouped into line blocks of four lines, respectively, the lines of one line block being adjacent to each other, respectively. The line blocks are assigned to the first and the second cache parts in a way that each cache part contains only line blocks which are not adjacent to each other. Of course, the present invention is not restricted to this assignment strategy. Every other suitable method for assigning the sliding window update data to different cache parts may be employed.

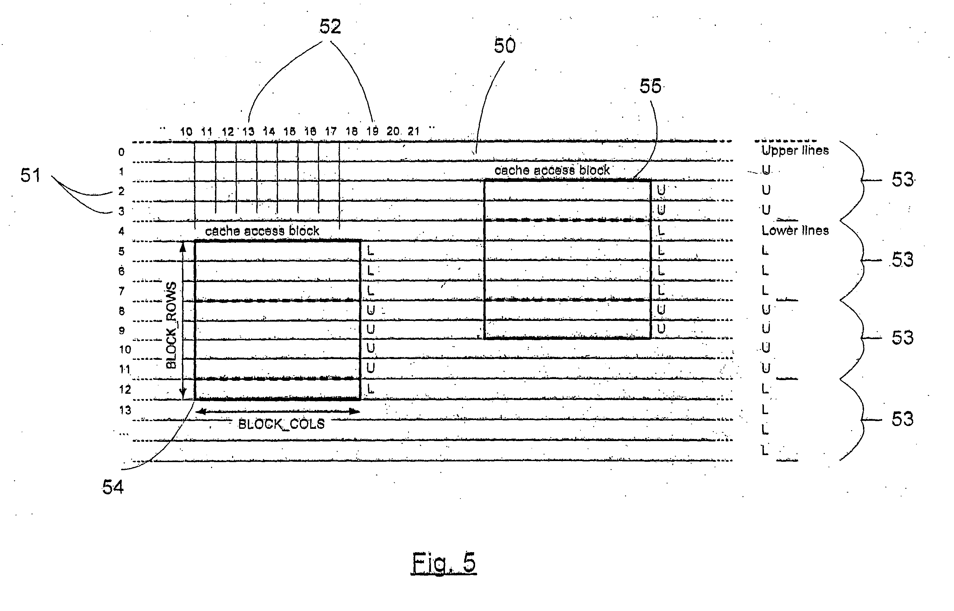

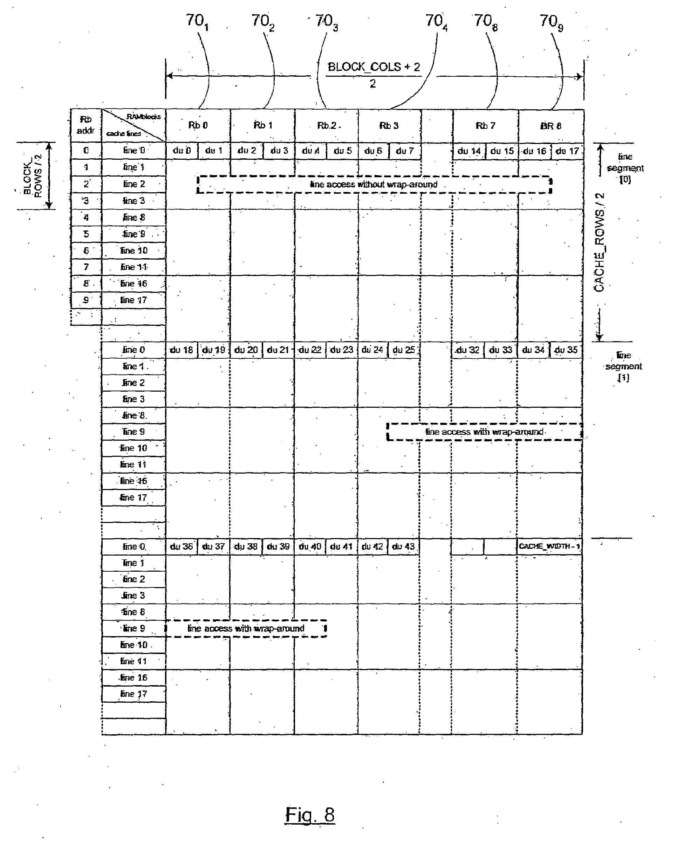

In a preferred embodiment (see figures 5, 8), a cache area of BLOCK_COLS x BLOCK_ROWS x DU (preferably 8 bits) is read out of the high access bandwidth cache within the time of four clocks, wherein each cache part of the high access bandwidth cache is split up into (BLOCK_COLS + 2)/2 blocks wherein each block shows a data width of two DUs (preferably 16 bits) and wherein BLOCK_COLS/BLOCK_ROWS is the number of columns/rows of said cache area. This memory structure allows a transparent and effective handling of stored image data and is in particular designed to effectively access data blocks of 1024 bits within a time frame of four clocks. For example, the cache can be organized in a way that 128 bits are respectively read out of one part of the high access bandwidth cache within one clock. In this case, each cache part of the high access bandwidth cache is split up into several blocks. Each block has a data width of two DUs (preferably 16 bits which represents two data units of each 8 bit).

Preferably, the cache parts are realized as column-oriented FIFO (first in first out)-cache parts. However, the invention is not restricted to this.

The invention further provides an architecture for accessing image data stored in a low access bandwidth memory, comprising:
- means for generating sliding window update data from image data stored in the low access bandwidth memory on the basis of a sliding window readout process,
- a buffer being connected to the sliding window update data generating means for buffering generated sliding window update data,
- a high access bandwidth cache being connected to the buffer, wherein the buffer transfers sliding window update data accumulated in the buffer to the high access bandwidth cache after a certain amount of new sliding window update data has been accumulated in the buffer.

Preferably, the high access bandwidth cache is split up into at least two cache parts which are separately accessible. The high access bandwidth cache may for example be split up into a first cache part and a second cache part, the first cache part covering a first part of image data lines contained in the sliding window update data, and the second cache part covering a second part of image data lines contained in said sliding window update data. The buffer may show means for sorting generated sliding window update data into said different cache parts according to a sorting algorithm.

As already described (referring to Fig. 8), the cache lines of said high access bandwidth cache are preferably (of course other sorting methods are also possible) grouped into nine blocks of four lines being adjacent to each other, respectively, wherein these line blocks are assigned to the first and second cache parts in a way that each cache part contains only data of line blocks which are not adjacent to each other. A cache area of BLOCK_COLS x BLOCK_ROWS x DU (Data Unit, preferably 8 bits large) bits can be read out of the high access bandwidth cache within four clocks, wherein each cache part of the high access bandwidth cache is split up into (BLOCK_COLS + 2)/2 blocks, each block having a data width of two DUs (preferably 16 bits large), wherein BLOCK_COLS/BLOCK_ROWS is the number of columns/rows of the cache area. For example, 128 usable bits (there are only 128 usable bits in 9 columns (blocks) with 16 bits each due to an uneven cache read block column address) can be respectively read out of one part of the high access bandwidth cache within one clock, wherein each cache part of the high access bandwidth cache is split up into nine blocks, each block having a data width of two DUs (data units), which is preferably 16 bits large. These 16 bits represent 2 x 8 bit data units. The cache parts are preferably realized as FIFO-caches.

Here, cache part 1 contains cache lines [1, 2, 3, 4], [9, 10, 11, 12], ..., and cache part 2 contains cache lines [5, 6, 7, 8], .... The invention is not restricted to this embodiment. For example, it is possible to store into cache part 1 the lines [1, 3, 5, 7], ..., and in cache part 2 the lines [2, 4, 6, 8], ... .

The FIFO-caches are preferably realized in a stripe oriented way (striped cache segments). Preferably, the FIFO-caches comprise a virtual to real column translator and a real to virtual column translator, respectively, wherein the virtual to real column translator maps a virtual cache column of a cache part to a real cache column of the cache part, and the real to virtual column translator maps a real cache column of a cache part to a virtual cache column of the cache part, wherein the mapping process is managed by a phase counter being part of the cache parts, respectively. The FIFO-caches may be divided into various cache stripes. In this case a cache stripe is a group of successive cache columns. Each cache column is one data unit DU wide (preferably 8 bit). Each cache stripe consists of preferably 8 cache columns, which is also the width of a cache update segment and which is also the width of the sliding window step size. Advantageously, each cache stripe shows the memory capacity which is needed to store said certain amount of new sliding window update data which can be buffered within the buffer (storing the new sliding window update data). The translation of virtual to real cache columns and real to virtual cache columns is preferably independent of the cache stripe width. Each individual cache column will be translated from virtual to real and from real to virtual regardless to which cache stripe it belongs to.

In the following description, the method/architecture for accessing image data stored in a low access bandwidth memory according to the present invention will be described in detail by way of example.

First, the principles of the "sliding window"-method will be described in detail.

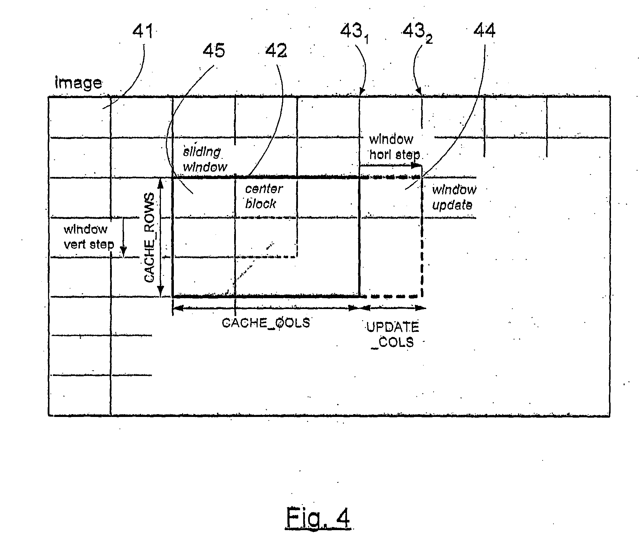

In Fig. 4, image data 41 of an image is represented in a two-dimensional manner. The sliding window 42 moves over the image data 41, wherein the content of the sliding window 42 (*i. e.*, a part of the image data 41 falling within the sliding window 42) changes as the sliding window 42 changes its position. Here, the right border of the sliding window 42 moves within one time step from a first position 43₁ to a second position 43₂. After having moved from the first position 43₁ to the second position 43₂, the data content of the sliding window 42 has changed. New image data 44 (UPDATE_COLS x CACHE_ROWS) has become part of the sliding window content (right side), whereas old image data 45 has been pushed out of the sliding window (left side). In this example, the sliding window moves from the left to the right in a horizontal manner. However, arbitrary movements over the image data are possible.

Only the new image data 44 (to be more exactly, sequences thereof) which is also referred to as sliding window update data is copied into a high access bandwidth cache. The sliding window method enables an image processing algorithm to access parts of the image data 41 (sliding window data) via a high access bandwidth cache with high speed.

Now, making reference to Fig. 5, examples of orientations of possible cache areas to be read from the high access bandwidth cache will be described.

Image data of the high access bandwidth cache 50 is represented in Fig. 5 by a two-dimensional field having several cache rows 51 and cache cols 52. The cache rows 51 are grouped to cache line segments ("CLS") 53 comprising four cache rows, respectively. The cache rows 51 of one cache line segment 53 either belong to "upper lines" ("U") or "lower lines" ("L"). Upper lines and lower lines alternate, *i. e.*, four upper lines will be followed by four lower lines, which itself will be followed by four upper lines again, etc. Upper and lower lines could also alternate on a line basis. Here, a first cache access block 54 thus comprises three lower lines being followed by four upper lines and one lower line again spawing over three cache line segments 53. A second cache access block 55 being shifted by three cache rows upwards with respect to the first cache access block 54 comprises two upper lines being followed by four lower lines and two upper lines again spawing over three cache line segments 53. The division of the cache rows 51 in upper and lower lines serves for the purpose of assigning different cache rows 51 to different cache parts as will become apparent in the following description while making reference to Fig. 5.

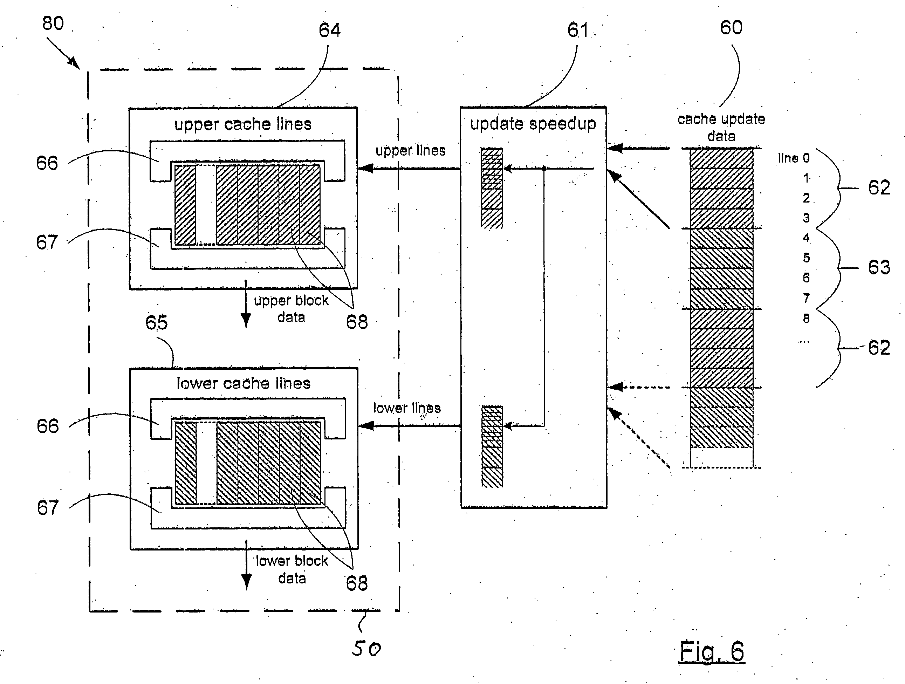

In Fig. 6, a preferred embodiment of a cache architecture 80 containing sliding window update data is shown. Sliding window update data 60 is read out from the low access bandwidth memory (not shown) and supplied to a buffer (update speed up module) 61, wherein the buffer (also referred to as speed up buffer) 61 separates update data 62 belonging to upper lines from update data 63 belonging to lower lines. Update data 62 belonging to upper lines is written by the buffer 61 in a first cache part 64 of the high access bandwidth cache, whereas update data 63 belonging to lower lines is written by the buffer 61 into a second cache part 65 of the high access bandwidth cache. The buffer 61 writes into the two cache parts 64, 65 only if the buffer or parts thereof are full, *i. e.*, if no more storing capacity is left for new incoming sliding window update data 60. This has the advantage that accessing processes with respect to the two cache parts 64, 65 are interrupted only a few times. That is, the two cache parts 64, 65 are not updated and therefore not blocked for accessing processes as long as new update data 60 is accumulated in the buffer 61. The buffer 61 may for example be realized as high access bandwidth memory.

Each cache part 64, 65 comprises a virtual to real column translator 66 and a real to virtual column translator 67, respectively. Each cache part 64, 65 comprises several cache columns grouped into cache stripes 68.

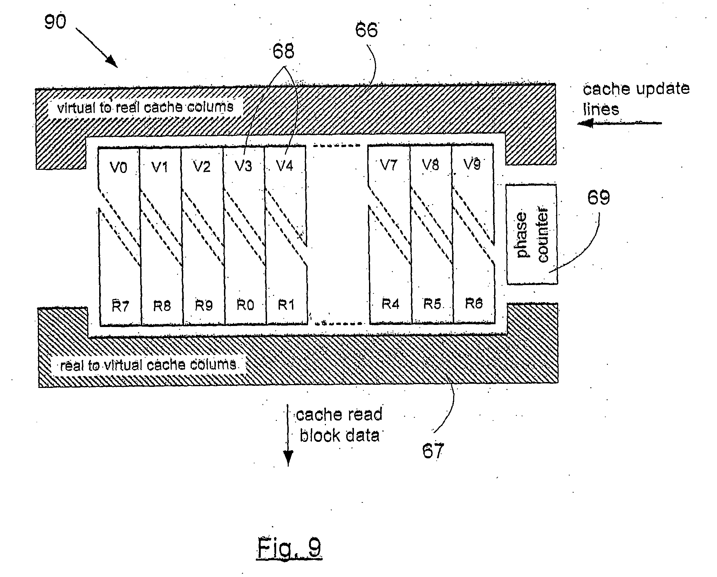

As can be taken from Fig. 9, a preferred embodiment 90 of the cache parts 64, 65 comprises a first to tenth virtual cache stripe V0 to V9. Each virtual cache stripe V0 to V9 can also be interpreted as one of a first to tenth real cache stripe R0 to R9. The number of the cache columns is arbitrary and determines the width of the sliding window. The number of 10 stripes is just an example. The "positions" of the virtual cache stripes V0 to V9 are fixed, whereas the positions of the real cache stripes R0 to R9 change each time when a new cache stripe 68 is written into a cache part 64, 65. Here, each new cache stripe 68 is written into the tenth virtual cache stripe V9. At the same time, the cache stripe 68 stored within the first virtual cache stripe V0 is pushed out of the cache part 90. This means that the newest cache stripe is inserted into the cache part 90 from the right, whereas the oldest cache stripe is pushed out at the left. The positions of the first to tenth real cache stripes R0 to R9 are not fixed, but move from the right to the left. A phase counter 69 is responsible for assigning to each virtual cache stripe V0 to V9 a real cache stripe R0 to R9. Figs. 6 and 9 show that the cache parts 64, 65 are divided into several cache stripes (cache update stripes) 68, respectively.

It was noted that the cache stripes 68 are a virtual FIFO, and are organized as a ring buffer. This means that the stripe which is pushed out to the, *e. g.*, left will be overwritten with the new update stripe coming in from the speedup buffer. In order to achieve this, a "virtual to real" and "real to virtual" cache column translator (partly realized as a column address translator) 66, 67 is embracing the cache.

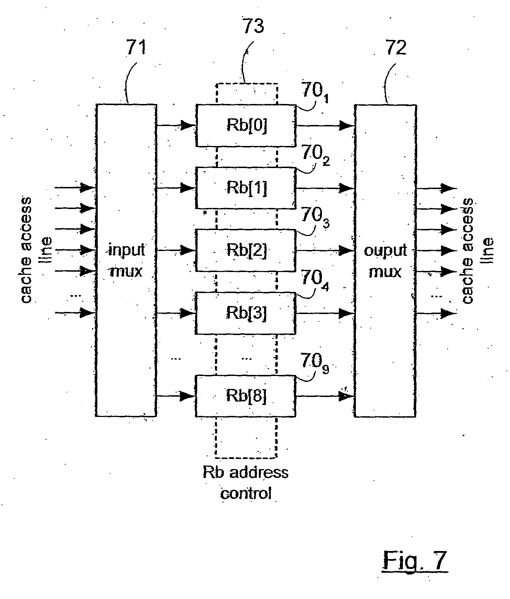

In Fig. 9 an input translator 66 handles the virtual stripes V0 to V9 for writing the cache updates. The output translator handles the virtual stripes V0 to V9 for reading the cache content. The phase counter 69 determines the real cache stripes R0 to R9 with any given virtual cache stripe V0 to V9. The virtual stripes V0 to V9 are fixed and start with column V0 on the left side up to, *e. g.*, virtual stripe V9 on the right side. The reverse direction is also possible starting from the right to the left. This strip is the update stripe. The shown cache is in the state phase 3 (out of, *e. g.*, 10 phases). During this phase writing to the virtual stripe V9 will be translated such that the real stripe R6 is written. Similarly, reading the virtual stripe V0 translates into reading the real stripe R7, and so on. The phase counter 69 increases with each new written cache column update and wraps around to 0 when it reached the maximum value, e. g., 9 in our example. The input and output multiplexers 71, 72 shown in Fig. 7 take care, among other steps, of this translation step.

The number of cache columns grouped into cache stripes determines the width of the image segment stored in the cache. That means, the number of ten cache stripes in this example translates into eighty cache columns (8 columns per stripe). Generally, the number of cache stripes is arbitrary. The numbers V0 to V9 and R0 to R9 indicate the cache phases. Within a cache stripe, cache columns are always consecutive. Only the real location of a virtual cache stripe (and thus virtual cache column) is dependent on the cache phase.

Now, making reference to Fig. 7 and 8, a preferred embodiment of a substructure of the two cache parts 64, 65 in Fig. 6 will be explained.

A cache part 64, 65 comprises a first to ninth RAM-block 70₁ to 70₉. An input process of sliding window update data into those RAM-blocks 70, to 70₉ is controlled by a first sorting/managing block 71, whereas sliding window update data read out from the first to ninth RAM-block 70₁ to 70₉ is sampled/organized by a second sorting/organizing block 72. To properly write into and read out of the RAM-blocks 70₁ to 70₉ a RAM-block address control means 73 is employed.

The invention can also be presented as follows:

Large memories to store video image data don't have a high access bandwidth. Video processing algorithms need a high bandwidth for read access to limited areas of a video image data. An area is sliding over an image such that for each new position, only a fraction of the area changes. The invention describes an architecture for storing a local copy of that area to a cache memory with a high access bandwidth by updating only the changed part of that area.

Video signal processing, particularly picture enhancement processing and format conversion processing, requires to access the data of successive images. Example applications are motion estimation algorithms, motion compensated interpolation algorithms, temporal noise reduction. The image data access must be fast in order to realize real-time processing performance. This access bandwidth exceeds the available bandwidth of large image memories, which store the data of the images. In general, memories larger in size tend to have lower bandwidths available.

The image processing algorithms mentioned above work on only fractions of an image (an image segment) at a time, rather than on the entire image. This segment represents a smaller sliding window, which moves over the larger source image, which moves horizontally and/or vertically in specific step sizes. The data of the segment will be copied into a cache memory. Due to the "sliding window" segment, where most of the data of the new window position is identical to the old window position, only the new data (update component) will be copied from the large memory to the cache each time the window moves overwriting the old cache content, rather than copying the entire window content every time.

With the cache, a high bandwidth block read access could be implemented with a low bandwidth field memory interface.

Typical resources of reconfigurable logic chips are, *e. g.*, RAM blocks. They are specific to *e. g.* FPGA (Field Programmable Gate Arrays) and are used to implement the cache, so no generic logic function will be used to synthesize RAM functionality. Thus, more FPGA logic functions are available for logic synthesis. The RAM blocks are available on the FPGA-example platform but also on other configurable logic chips or even ASIC environments. Using one more RAM block than needed for the BLOCK_COLS width is done to have block access with word boundaries, rather than double word boundaries, which would be implied by the double word width of the RAM blocks.

As can be taken from Fig.4, the cache data content represents a segment of a large image. This sliding window moves horizontally stepwise over the image. In the described preferred embodiment the window moves from the left to the right. When it reaches the right image border it starts at the left edge again but one vertical step size further down. Alternative motion directions, such as zigzag scan, are possible and work with the described principles. For every new window position only a certain number of pixels are new to the window content (UPDATE_COLS x CACHE_ROWS), and replace old window content. Only this new data is written to the cache as cache update data. The cache memory can be viewed as a pipe or FIFO, where new content is coming in from the right and old content is being pushed out to the left in case of a left to right movement of the sliding window.

A cache implementation may be based on a ring buffer concept. But this detail does not belong to the invention. For every new window position, a full "cache access cycle", consisting of cache update write and several cache block reads, is completed.

The basic idea of having the image window content in a separate cache memory is to be able to access this data with the required access bandwidth. The hardware platform on which the implementation is based has certain restrictions in terms of available memory resources and maximum clock speeds. In order to achieve the access bandwidth required to implement the respective system, the window content is split, such that certain window lines belong to different independent cache parts. A preferred embodiment is special for the given bandwidth requirements and platform constraints.

In Fig. 5, the window is split into two cache parts. One part stores the lines we call "upper lines", the other part stores the "lower lines". In this example, the first four lines belong to the "Upper Lines", the next four lines belong to the "Lower Lines" and so on. The separation into two parts is derived from the cache access block size, which has eight lines, split into four upper and four lower lines. In general, to access a block of a size [BLOCK_COLS x BLOCK_ROWS], half of the lines are stored in the "upper lines" cache part, the other half is stored in the "lower lines" cache part. Alternating upper and lower lines on a line basis is also possible, for example.

Larger access blocks or higher access bandwidth requirements could utilize more cache parts while maintaining the clock speed, smaller blocks could utilize less access clock cycles per block while using the same speed.

In order to determine the maximum access bandwidth of a cache memory, the access data width and the access clock speed are multiplied. Then, on every clock cycle, a cache access is possible. Possible access wait-states would lower the bandwidth.

Fig. 6 shows a preferred embodiment of a cache architecture according to the present invention. An update data speedup module is connected to two independent cache parts. Each part is a pipe memory with a random access read port.

Referring to the previously mentioned window step size of UPDATE_COLS, the pipe content is divided into segments. Each segment has the width of a cache update block.

For every cache access cycle, one new cache segment is written. Depending on the window moving direction, new data is being shifted into the pipe from either the left or the right side. Our preferred embodiment shifts content from the right.

The cache update speedup buffer will store data, which is coming from a low bandwidth data source, e.g. an external field memory. The data will be written slowly but almost continuously, but it will be read rapidly in bursts. That way, the differences in data access speed of the external memory and of the internal cache are adjusted.

Update data comes from the external memory to the speedup module on an update line by update line basis with a low bandwidth and is stored into the respective speedup buffers. Each cache part has a respective speedup buffer. In our preferred embodiment one buffer stores the "upper lines" (0, 1, 2, 3, 8, 9 ...), the other stores the "lower lines" (4, 5, 6, 7, 12, 13 ...). When the buffers are full, their content is then being transferred to the cache memory with a high bandwidth. The upper lines being lines (0, 2, 4, 6, 8, 10, ...) and the lower lines being lines (1, 3, 5, 7, 9, ...) is also possible.

The entire cache is divided into several individual cache modules. Each module is identical and stores only the respective lines. A preferred embodiment shows two cache modules storing either "upper" or "lower" lines, respectively.

Such an individual cache module is organized as a set of memory blocks. They are called RAM blocks (Rb). As an example for a preferred embodiment, each block has 16 bit data words per address. The cache access bandwidth requirements of the processing algorithm is to read [16x8x8 bit] =1024 bits every four clocks, or 256 bit per clock. By dividing the cache into two parts, 128 bit are accessed in the "upper lines" part and 128 bit are accessed in the "lower lines" part. With 16 bit per RAM block a total of [128 bit/16 bit] = eight RAM blocks are needed per cache part. Each RAM block stores two data units (du) of eight bits each. For alignment reasons nine RAM blocks are needed. Now, per clock cycle [9x16] = 144 bits are accessible per clock, from which usable 128 bit have to be extracted. Fig. 7 shows an input mux for distributing 128 bits per cache write clock and an output mux reordering 144 bits per cache read clock. The Rb address control unit controls each individual RAM block.

A preferred embodiment of a data structure of the cache using respective RAM blocks is shown in Fig. 8. With nine RAM blocks addressed in parallel, eighteen data units (du) can be accessed. At address[0] of the RAM blocks the data units [0..17] of cache line[0] are stored, at address[1] the data units [0..17] of line[1] are stored, in address[2] the data units of line[2] are stored, and so on. Each cache part stores only it's respective lines, e.g. either "upper lines" or "lower lines".

The first address to store data units [18..35] of row[0] computes as follows: (CACHE_ROWS/2) x1. This is the beginning of the line segment [1]. The address of data units [36..53] of row[0] is (CACHE_ROWS/2) x2 as line segment [2], data units [54..71] start at (CACHE_ROWS/2)x3 as line segment [3], and so on.

An alternative to the line oriented description is the column-oriented description. The content of RAM block[0] are the data units [0,1] [18,19] [36,37] [54,55] [72,73] ... RAM block[1] stores the data units [2,3] [20,21] [38,39] [56,57]...

Let's use two examples to clarify the method. To access data units [1..17], each RAM block uses the same address and all data units at the RAM block outputs are in the correct sequential order. This is a line access without wrap-around where no data reshuffling is needed.

Alternatively, in order to access data units [25..40], one set of the RAMblocks [3..8] addresses the regular line segment, whereas the other set of RAMblocks [0..2] addresses the next line segment. The output mux reorganizes the data units, such that a line of 18 data units is consecutively taken from RAMblocks[3..8] containing data units [25..35] and then from RAMblocks[0..2] containing data units [36..40].

"Rb" means RAM block and "du" means data unit. As a preferred embodiment it shows four lines as [BLOCK_ROWS/2], it shows nine RAM blocks with 18 data units = [BLOCK_COLS+2]/2. The CACHE_ROWS are not specified, neither are the CACHE_COLS. Preferably, CACHE_COLS is a multiple of [BLOCK_COLS+2], but not necessarily.

Also, two examples for a cache access are shown. One access example without wrap-around, where no data reshuffling is needed and all RAM blocks are addressed with the same memory address. The other access example has a wrap-around where Rb[3..8] share the same memory address and Rb[0..2] have a higher address.

### Table of Reference Signs

| | |
|---|---|
| First image data field | = 1₁ |
| Second image data field | = 1₂ |
| Third image data field | = 1₃ |
| Fourth image data field | = 1₄ |
| Reference block | = 2 |
| Best matching block | = 3 |
| Search field access window | = 4 |
| Estimated vector | = 5 |
| Image memory | = 10 |
| Motion estimation unit | = 11 |
| Noise reduction unit | = 12 |
| Splitting means | = 13 |
| First preprocessing means | = 14 |
| Second preprocessing means | = 15 |
| Motion estimation cache | = 16 |
| Noise reduction cache | = 17 |
| Image update unit | = 18 |
| Cache line section | = 19 |
| Reference cache update data | = 20 |
| Search cache update data (dark) | = 21 |
| Noise reduction cache update data (white) | = 22 |
| Horizontal overlap area | = 24 |
| Vertical overlap area | = 25 |
| Image data | = 41 |
| Sliding window | = 42 |
| First position | = 43₁ |
| Second position | = 43₂ |
| New image data | = 44 |
| Old image data | = 45 |
| High access bandwidth cache | = 50 |
| Cache row | = 51 |
| Cache col | = 52 |
| Cache line segment | = 53 |
| First cache access block | = 54 |
| Second cache access block | = 55 |
| Sliding window update data | = 60 |
| Speedup buffer | = 61 |
| Update data belonging to upper cache line segments | = 62 |
| Update data belonging to lower cache line segments | = 63 |
| First cache part | = 64 |
| Second cache part | = 65 |
| Phase counter | = 69 |
| First to ninth RAM-block | = 70₁ to 70₉ |
| Input multiplexer | = 71 |
| Output multiplexer | = 72 |
| RAM-block access control means | = 73 |
| Cache architecture | = 80 |
| Virtual to real column address translator | = 66 |
| Real to virtual column address translator | = 67 |
| Cache stripe | = 68 |
| Preffered embodiment of a cache part | = 90 |
| First to tenth virtual cache stripe | = V0 to V9 |
| First to tenth real cache stripe | = R0 to R9 |
| Data unit | = DU |

## Claims

1. Method for providing a combined system of a motion estimation unit (11) and a noise reduction unit (12) with input image data, comprising the following steps:
- using a sliding window mechanism to generate a common image update data stream from image data stored in a common image memory (10),
- splitting said data stream to obtain a first and a second data stream which are identical,
- wherein said motion estimation unit (11) is supplied with said first data stream, and said noise reduction unit (12) is supplied with said second data stream.

2. Method according to claim 1, **characterized in that** said first data stream or parts thereof is/are piped through a motion estimation cache (16) of said motion estimation unit (11).

3. Method according to claim 1 or 2, **characterized in that** said second data stream or parts thereof is/are piped through a noise reduction cache (17) of said noise reduction unit (12).

4. Method according to claim 1, **characterized by** preprocessing said first data stream according to a first preprocessing algorithm before supplying it to said motion estimation cache (16).

5. Method according to claim 1, **characterized by** preprocessing said second data stream according to a second preprocessing algorithm before supplying it to said noise reduction cache (17).

6. Method according to any one of the preceding claims, **characterized in that** said common image update data stream consists of several update data units (18), wherein each data unit represents a two-dimensional rectangular area of images stored in said image memory (10).

7. Method according to claim 6, **characterized in that** a height of said rectangular area is as large or larger than the maximum of the heights of said noise reduction cache (17) and said motion estimation cache (16).

8. Method according to any one of the claims 6 or 7, **characterized in that** a width of said rectangular area (18) is as large or larger than a step size of a sliding window used in said sliding window mechanism.

9. Method according to any one of the claims 6 to 8, **characterized in that** said width of said rectangular area is larger than a step size of a sliding window used in said sliding window mechanism, and/or said height of said rectangular area is larger than said maximum of the heights of said noise reduction cache (17) and said motion estimation cache (16), wherein said rectangular area comprises a central area (18) showing a width of said step size of said sliding window and a height of said maximum of the heights of said noise reduction cache (17) and said motion estimation cache (16), wherein said central area is surrounded by horizontal (24) and/or vertical (25) overlap areas, wherein only data lying within said central area is stored in said noise reduction cache (17) and said motion estimation cache (16).

10. Method according to claim 9, **characterized in that** data lying within said horizontal (24) and/or vertical (25) overlap areas is used as run-in data or run-out data in respective preprocessing steps in which said first/second data streams are preprocessed.

11. Image processing system (30), comprising:
- a motion estimation unit (11) and a noise reduction unit (12) which are connected to a common image memory (10),
- means for generating a common image update data stream from image data stored in said image memory (10) on the basis of a sliding window mechanism,
- means (13) for splitting said data stream to obtain a first and a second data stream which are identical, and
- means for supplying said first data stream to said motion estimation unit (11) and for supplying said second data stream to said noise reduction unit (12).

12. Image processing system (30) according to claim 11, **characterized in that** said motion estimation unit (11) comprises a high access bandwidth motion estimation cache (16) which stores data of said first data stream, and said noise reduction unit (12) comprises a high access bandwidth noise reduction cache (17) which stores data of said second data stream.

13. Image processing system (30) according to claim 11 or 12, **characterized in that** between said splitting means (13) and said motion estimation unit (12) a first preprocessing means (14) is provided, and/or between said splitting means (13) and said noise reduction unit (12) a second preprocessing means (15) is provided, said first/second preprocessing means (14, 15) preprocessing said first/second data stream according to a first/ second algorithm.

14. Image processing system (30) according to any one of the claims 11 to 13, **characterized in that** said motion estimation cache (16) and said noise reduction cache (17) are organized as FIFO-caches through which said first/second data streams are piped.

15. Image processing system (30) according to claim 14, **characterized in that** said common image update data stream consists of several update data units (18), wherein each data unit represents a two dimensional rectangular area of images stored in said image memory (10).

16. Image processing system (30) according to claim 15, **characterized in that** a height of said rectangular area is as large or larger than the maximum of the heights of said noise reduction cache (17) and said motion estimation cache (16).

17. Image processing system (30) according to claim 15 or 16, **characterized in that** a width of said rectangular area (18) is as large or larger than a step size of a sliding window used in said sliding window mechanism.

18. Image processing system (30) according to any one of the claims 15 to 17, **characterized in that** said motion estimation cache (16) and said noise reduction cache (17) show capacity for storing a certain amount of said update data units (18) or parts thereof.

19. Image processing system (30) according to any one of the claims 15 to 18, **characterized in that** said width of said rectangular area is larger than a step size of a sliding window used in said sliding window mechanism, and/or said height of said rectangular area is larger than said maximum of the heights of said noise reduction cache (17) and said motion estimation cache (16), wherein said rectangular area comprises a central area (18) showing a width of said step size of said sliding window and a height of said maximum of the heights of said noise reduction cache (17) and said motion estimation cache (16), wherein said central area is surrounded by horizontal (24) and/or vertical (25) overlap areas, wherein only data lying within said central area is stored in said noise reduction cache (17) and said motion estimation cache (16).

20. Image processing system (30) according to claim 19, **characterized in that** data lying within said horizontal (24) and/or vertical (25) overlap areas is used as run-in data or run-out data in said first/second preprocessing means (14, 15), in which said first/second data streams are preprocessed.

21. Method for accessing image data stored in a low access bandwidth memory (41), comprising the following steps:
- using a sliding window (42) mechanism to read out image data stored in said low access bandwidth memory (41), thereby generating sliding window update data,
- buffering generated sliding window update data (60) in a buffer (61),
- transferring sliding window update data (60) accumulated in the buffer (61) to a cache (50) having a high access bandwidth after a certain amount of new sliding window update data (60) has been accumulated in the buffer (61),
- reading sliding window update data (60) stored within said high access bandwidth cache (50) out of said cache (50), thereby accessing said image data.

22. Method according to claim 21, **characterized by** accessing said image data via at least two independent cache parts (64, 65) of said high access bandwidth cache into which said sliding window update data (60) has been stored.

23. Method according to claim 22, **characterized in that** said buffer (61) sorts generated sliding window update data (60) into said different cache parts (64, 65) according to a sorting algorithm.

24. Method according to claim 23, **characterized in that** said sorting algorithm assigns a first (62) part of image data lines contained in said sliding window update data (60) to a first cache part (64) and a second part (63) of image data lines contained in said sliding window update data to a second cache part (65).

25. Method according to claim 24, **characterized in that** cache lines (51) of said high access bandwidth cache (50) are grouped into cache line segments (53) of four lines being adjacent to each other, respectively, wherein these cache line segments (53) are assigned to said first and second cache parts (64, 65) in a way that each cache part contains only data of line blocks (53) which are not adjacent to each other, or that cache lines (51) of said high access bandwidth cache (50) are grouped into cache line segments (53) of four lines, wherein each group either stores even cache lines or odd cache lines.

26. Method according to claims 24 or 25, **characterized in that** a cache area (54, 55) of BLOCK_COLS x BLOCK_ROWS x DU bits is read out of said high access bandwidth cache (50) within four clocks, wherein each cache part (64, 65) of said high access bandwidth cache (50) is split up into (BLOCK_COLS + 2)/2 blocks (70₁ to 70₉), each block (70₁ to 70₉) having a data width of two DUs, wherein BLOCK_COLS/BLOCK_ROWS is the number of columns/rows of said cache area.

27. Method according to claim 26, **characterized in that** 128 bits are respectively read out of one cache part (64, 65) of said high access bandwidth cache within one clock, wherein each cache part (64, 65) of said high access bandwidth cache is split up into several blocks (70₁ to 70₉), each block having a data width of two DUs.

28. Method according to anyone of the claims 22 to 27, **characterized in that** said cache parts (64, 65) are realized as FIFO-caches.

29. Architecture (80) for accessing image data stored in a low access bandwidth **memory (10), comprising:**
- means for generating sliding window update data (60) from image data stored in said low access bandwidth memory (10) on the basis of a sliding window readout process,
- a buffer (61) being connected to said sliding window update data generating means for buffering generated sliding window update data (60),
- a high access bandwidth cache (50) being connected to said buffer (61), wherein said buffer (61) transfers sliding window update data (60) accumulated in the buffer (61) to said high access bandwidth cache (50) after a certain amount of new sliding window update data (60) has been accumulated in the buffer (61).

30. Architecture (80) according to claim 29, **characterized in that** said high access bandwidth cache (50) is split up into at least two cache parts (64, 65) which are separately accessible.

31. Architecture (80) according to claim 30, **characterized in that** said buffer (61) shows means for sorting generated sliding window update data (60) into said different cache parts (64, 65) according to a sorting algorithm.

32. Architecture (80) according to claim 30 or 31, **characterized in that** said high access bandwidth cache (50) is split up into a first cache part (64) and a second cache part (65), said first cache part (64) covering a first part (62) of image data lines contained in said sliding window update data (60), said second cache part (65) covering a second part (63) of image data lines contained in said sliding window update data (60).

33. Architecture (80) according to claim 32, **characterized in that** the cache lines (51) of said high access bandwidth cache (50) are grouped into nine blocks (70, to 70₉) of four lines being adjacent to each other, respectively, wherein these line blocks (70, to 70₉) are assigned to said first and second cache parts (64, 65) in a way that each cache part contains only data of line blocks (53) which are not adjacent to each other.

34. Architecture (80) according to claims 32 or 33, **characterized in that** a cache area (54, 55) of BLOCK_COLS x BLOCK_ROWS x 8 bits can be read out of said high access bandwidth cache (64, 65) within four clocks, wherein each cache part (64, 65) of said high access bandwidth cache is split up into (BLOCK_COLS + 2)/2 blocks (70₁ to 70₉), each block having a data width of sixteen bits, wherein BLOCK_COLS/BLOCK_ROWS is the number of columns/rows of said cache area (54, 55).

35. Architecture (80) according to claim 34, **characterized in that** 128 bits can be respectively read out of one part of said high access bandwidth cache (50) within one clock, wherein each cache part of said high access bandwidth cache (50) is split up into nine blocks (70₁ to 70₉), each block having a data width of sixteen bits.

36. Architecture (80) according to anyone of the claims 29 to 35, **characterized in that** said cache parts are realized as column-oriented FIFO-caches with a ring buffer implementation.

37. Architecture (80) according to claim 36, **characterized in that** said FIFO-caches comprise a virtual to real column translator and a real to virtual column translator, respectively, wherein said virtual to real column translator maps a virtual cache column of a cache part to a real cache column of said cache part, and said real to virtual column translator maps a real cache column of a cache part to a virtual cache column of said cache part, wherein said mapping process is managed by a phase counter being part of said cache parts, respectively.

38. Architecture (80) according to claim 37, **characterized in that** said virtual cache columns/said real cache columns are grouped together into cache stripes (68), respectively, wherein each cache stripe shows the memory capacity which is needed to store said certain amount of new sliding window update data (60) being buffered within said buffer (61).

39. Computer program product, comprising computer program means adapted to perform and/or realize the method and/or system and/or archtecture (80) for accessing image data according to anyone of the claims 1 to 10/11 to 20/21 to 28/29 to 38, when it is executed on a computer, a digital signal processing means, or the like.

40. Computer-readable storage means for storing a computer program product according to claim 39.
